# EUROPÄISCHE PATENTANMELDUNG

(11) **EP 1 085 550 A2**
(43) Veröffentlichungstag der Anmeldung: **21.03.2001**
(21) Anmeldenummer: 00117968.8
(22) Anmeldetag: 22.08.2000
(51) Int. Cl.: H01H 71/08

(54) **Installationsschalter**

(30) Priorität: 13.09.1999 DE 29916001 U; 22.10.1999 DE 19950995
(71) Anmelder: ABB PATENT GmbH, 68309 Mannheim (DE)
(72) Erfinder: Throm, Heinz, 68519 Viernheim (DE)
(74) Vertreter: Miller, Toivo

(57) **Zusammenfassung**

Die Erfindung betrifft einen Installationsschalter insbesondere Leitungsschutzschalter oder Fehlerstromschutzschalter mit einer Anschlußstelle für eine Querverdrahtung und einen Leiterdraht. Für den Leiterdraht ist eine Schraubklemme und für die Querverdrahtung in Form einer Sammelschienenanordnung ist eine Steckklemme vorgesehen, wobei die Steckklemme näher zur Befestigungsseite hin als die Schraubklemme gelegen ist.

## Beschreibung

Die Erfindung betrifft einen Installationsschalter, insbesondere einen Leitungsschutzschalter oder Fehlerstromschutzschalter nach dem Oberbegriff des Anspruches 1.

Die Anschlußtechnik bei Leitungsschutzschaltern oder Fehlerstromschutzschaltern war in der Vergangenheit lediglich eine Schraubtechnik, wobei eine Klemme vorgesehen war, bei der eine Sammelschienenanordnung und ein Leiterdraht gleichzeitig mit einer Klemmschraube fixiert wurden. Dabei ist die. Klemmenanordnung so gewählt, daß die Sammelschienenanordnung ― von der Frontseite des Schaltgerätes aus gesehen ― vor dem Leiterdraht festgeklemmt ist. Dies bedeutet, daß das Einfädeln des Leiterdrahtes in die Klemmenanordnung Schwierigkeiten bereitet, insoweit, als die Einfädelstelle bzw. die Aufnahmeöffnung durch die Sammelschienenanordnung verdeckt wird. Hierbei ist es häufig zu Fehlanschlüssen gekommen.

Bei der Ausgestaltung gemäß DE 40 21 825 A1 ist eine Klemmvorrichtung bekannt geworden, bei der ein an einer Anschlußfahne der Sammelschienenanordnung ansteckbares Zwischenteil in eine Steckklemme im Schaltgerät eingesteckt und damit verschraubt wird. Der Leitungsschutzschalter mit dem Zwischenteil wird auf die Sammelschiene aufgesteckt.

Bei der Ausgestaltung nach der DE 199 05 442.8 ist eine Möglichkeit gegeben, einen Leitungsdraht mit einer Schraubklemme zu fixieren und die Sammelschienenanordnung mit einer Anschlußfahne in die Klemmenanordnung einzustecken. Hierbei ist aber auch das Problem gegeben, daß die Sammelschienenanordnung räumlich vor dem Leitungsdrahtanschluß liegt, so daß das Festklemmen des Leitungsdrahtes Probleme bereitet, weil die Einstecköffnung verdeckt ist.

Aufgabe der Erfindung ist es daher, eine Klemmenanordnung für einen Installationsschalter der eingangs genannten Art zu schaffen, bei dem die Probleme der bekannten Anordnungen vermieden sind.

Erfindungsgemäß wird diese Aufgabe dadurch gelöst, daß für den Leiterdraht eine Schraubklememe und für die Querverdrahtung in Form einer Sammelschienenanordnung eine Steckklemme vorgesehen sind, wobei die Steckklemme näher zur Befestigungsseite hin gelegen ist als die Schraubklemme.

Dadurch wird es möglich, die Sammelschienenanordnung mit einer Steckverbindung am Leitungsschutzschalter oder Fehlerstromschutzschalter, und den Leiterdraht mittels einer Schraubklemme anzuklemmen, wobei die Einführöffnung für den Leiterdraht vor der Einführöffnung der Anschlußfahne der Sammelschienenanordnung liegt, so daß die Einführöffnung für den Leiterdraht sichtbar und nicht von der Sammelschienenanordnung verdeckt ist.

Gemäß einer vorteilhaften Ausgestaltung der Erfindung kann die Steckklemme wenigstens zwei federnd gegeneinander gedrückte Zungen besitzen, zwischen die die Anschlußfahne an der Sammelschienenanordnung einschiebbar ist.

Weitere Vorteilhafte Ausgestaltung der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine Einsicht in einen Leitungsschutzschalter,
- Fig. 2 bis 4: drei unterschiedliche Sammelschienenanordnungen, die in den Leitungsschutzschalter gemäß Fig. 1 eingesetzt werden können.

Ein handelsüblicher Leitungsschutzschalter 10 besitzt eine Befestigungsseite 11, in der eine Ausnehmung 12 vorgesehen ist, mit der der Leitungsschutzschalter auf einer Hutprofiltragschiene 13 fixiert ist. Zu diesem Zweck besitzt die Ausnehmung 12 an einer Wandung eine feststehende Nase 14 und an der gegenüberliegenden Wandung eine bewegliche Nase 15, die unter dem Druck einer Feder gegen die Hutprofiltragschiene 13 gedrückt wird, wenn der Leitungsschutzschaltger 10 auf der Hutprofiltragschiene 13 montiert ist.

Der Leitungsschutzschalter 10 besitzt weiterhin ein Schaltschloß 16, an dem ein Schaltknebel 17 zur Betätigung des Leitungsschutzschalters 10 angeschlossen ist. Als Auslöser dient ein elektromagnetischer Auslöser 18, der Kurzschlüsse abschalten soll, sowie ein Überstromauslöser 19 in Form eines Thermobimetalls, der gemäß Linie 20 auf das Schaltschloß einwirkt. Der elektromagnetische Auslöser 18 wirkt ebenfalls auf das Schaltschloß ein gemäß Linie 21, und ein dem Auslöser 18 zugehöriger Anker schlägt auf einen Kontakthebel 22 gemäß Pfeilrichtung 23 auf, wodurch eine Kontaktstelle 24 geöffnet wird. Über die Wirkungslinie 21 wirkt der elektromagnetische Auslöser 18 auch auf das Schaltschloß ein, wodurch der bewegliche Kontakthebel gemäß Wirklinie 25 bleibend in Ausschaltstellung verbracht wird.

Wenn im Falle einer Auslösung der bewegliche Kontakthebel 22 in Ausschaltstellung gelangt, springt der an dem Hebel 22 entstehende Lichtbogenfußpunkt auf eine Lichtbogenleitschiene 26 über, die den Lichtbogen in ein Lichtbogenlöschblechpaket 27 führt, so daß der Lichtbogen gelöscht wird.

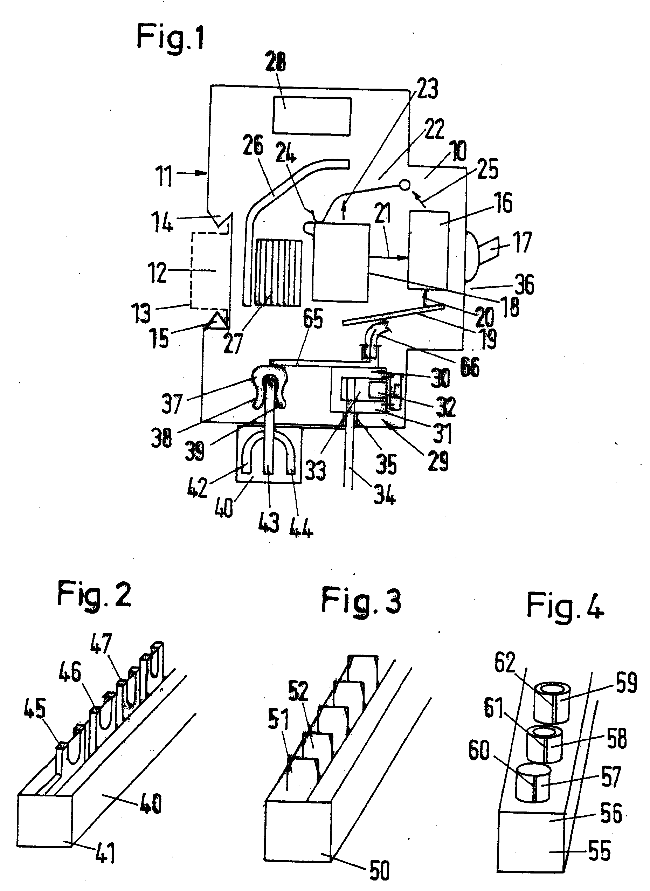

Im oberen Bereich (siehe Fig. 1) befindet sich eine Anschlußklemme 28, die eine Schraubklemme sein kann.

Die bis jetzt beschriebenen Komponenten gehören zu jedem Leitungsschutzschalter und haben mit der Erfindung an sich nichts zu tun. Sie dienen nur der Erläuterung und sind daher lediglich schematisch dargestellt.

Auf der der Anschlußklemme 28 entgegengesetzt liegenden Seite ist eine Anschlußklemmenanordnung 29 vorgesehen, die erfindungsgemäß eine einfache Rahmenklemme 30 mit einem Klemmenrahmen 31 und einer Klemmschraube 32 umfaßt; zwischen der Klemmschraube 32 und dem Klemmrahmen 31 ist eine Öffnung 33 vorgesehen, in die ein Leiterdraht 34 mit seinem abisolierten Ende einsteckbar und mittels der Klemmschraube 32 verklemmbar ist. Hierzu befindet sich am Schalter 10 eine Durchstecköffnung 35; die Durchstecköffnung, mit der der Leiter 34 ins Innere der einfachen Schraubklemme 31 einfügbar ist, ist in der Fig. 1 nicht dargestellt.

Die einfache Rahmenklemme 30 befindet sich im Bereich oder der Nähe der Frontseite 36.

Zu der Anschlußklemmenanordnung 29 gehört im Bereich der Befestigungsfläche 11 eine Klemmtulpe 37 (auch Tulpenkontakt 37 genannt), die zwei federnde Fahnen 38 und 39 aufweist, in die eine Sammelschienenanordnung 40 eingesteckt werden kann, die in der Fig. 2 näher dargestellt ist. Die Sammelschienenanordnung gemäß Fig. 2 ist an sich bekannt und besitzt ein Sammelschienengehäuse 41, in dem sich eine der Anzahl der Phasen entsprechende Anzahl von Flachbandleitern 42, 43 und 44 befindet, an denen Anschlußfahnen 45, 46, 47 angeformt sind, die in die entsprechende Tulpenkontakte 37 jeweils eines Leitungsschutzschalters eingesetzt werden können. Bei einer dreipoligen Anordnung sind drei Leitungsschutzschalter gemäß Fig. 1 nebeneinander aufgereiht; die Anschlußfahne 45 greift in die Klemmtulpe 37 des ersten Leitungsschutzschalters, die Anschlußfahne 46 in die entsprechende Klemmtulpe des nächsten Leitungsschutzschalters und die Anschlußfahne in die entsprechende Klemmtulpe des dritten Leitungsschutzschalters ein.

Die Anordnung gemäß Fig. 3 zeigt ähnliche Sammelschienenanordnung 50, bei der die Anschlußfahnen 51, 52 sich nicht, wie bei der Sammelschienenanordnung gemäß Fig. 2, in einer Ebene befinden, sondern bei denen die Anschlußfahnen 51, 52 senkrecht zu der Längserstreckung und parallel zueinander verlaufen. Entsprechend würde darin die Anschlußtulpe 37 durch zwei Federelemente gebildet, die eine Öffnung zwischen sich bilden und parallel zu der Zeichenebene, also parallel zur Breitseitenebene des Leitungsschutzschalters 10 verlaufen.

Bei der Sammelschienenanordnung 55 gemäß Fig. 4 sind die im Inneren des Sammelschienengehäuses 56 befindlichen Sammelschienen mit federnden Zylinderkontakten 57 bis 59 verbunden, wobei zur Erzielung einer Federeigenschaft ein Längsschlitz 60, 61 und 62 vorgesehen ist. Im Leitungsschutzschalter 10 befindet sich dann ein entsprechender zylinderförmiger Buchsenkontakt oder Steckerstiftkontakt.

Die Klemmtulpe 37 ist mit einem Verbindungsleiter 65 mit der Rahmenklemme 30 verbunden, so daß eine elektrische Kontaktierung zwischen den beiden Klemmen 30 und 37 erzielt wird. An dem Verbindungsleiter 65 kann dann ein Litzenleiter 66 anschließen, der den Strom den einzelnen Komponenten zuführt. Der Verbindungsleiter 65 kann starr sein und damit wird die Anschlußklemmenanordnung 29 mit Rahmenklemme 30 und Klemmtulpe 37 eine vormontierbare Einheit.

## Patentansprüche

1. Installationsschalter insbesondere Leitungsschutzschalter oder Fehlerstromschutzschalter mit einer Anschlußstelle für eine Querverdrahtung und einen Leiterdraht, dadurch gekennzeichnet, daß für den Leiterdraht eine Schraubklemme und für die Querverdrahtung in Form einer Sammelschienenanordnung eine Steckklemme vorgesehen sind, wobei die Steckklemme näher zur Befestigungsseite hin als die Schraubklemme gelegen ist.

2. Installationsschalter nach Anspruch 1, dadurch gekennzeichnet, daß die Steckklemme wenigstens zwei federnd gegeneinandergedrückte Zungen besitzt, zwischen die eine Anschlußfahne an der Sammelschienenanordnung einschiebbar ist.

3. Installationsschalter nach Anspruch 2, dadurch gekennzeichnet, daß die Zungen einen Aufnahmeraum bilden, der parallel zur Befestigungsfläche zur zugehörigen Schmalseite hin offen ist.

4. Installationsschalter nach Anspruch 2, dadurch gekennzeichnet, daß die federnd gegeneinandergedrückgte Zungen eine Aufnahmeöffnung bilden, die parallel zur Breitseite des Installationsschalters verläuft und zur zugehörigen Schmalseite hin offen ist.

5. Installationsschalter nach Anspruch 1, dadurch gekennzeichnet, daß die Steckklemme ein Steckerstift oder eine Steckerbuchse bildet.
